# EUROPEAN PATENT SPECIFICATION

(11) **EP 2 661 564 B1**
(45) Date of publication and mention of the grant of the patent: **24.08.2016**
(21) Application number: 12701174.0
(22) Date of filing: 06.01.2012
(51) Int. Cl.: F16B 13/06, B21D 53/24, F16B 13/12

(54) **A DOWEL FOR A CRUMBLY SUPPORTING MATERIAL**
DÜBEL FÜR KÖRNIGE TRÄGERMATERIALIEN
CHEVILLE POUR UN MATÉRIAU DE SUPPORT FRIABLE

(30) Priority: 07.01.2011 FR 1100061
(43) Date of publication of application: 13.11.2013
(73) Proprietor: SOCIETE DE PROSPECTION ET D'INVENTIONS TECHNIQUES SPIT, 26500 Bourg-Les-Valence (FR)
(72) Inventor: BULLET, Martine, F-25000 Besançon (FR); BULLET, Yves, F-25870 Chatillon Le Duc (FR); BARTHOMEUF, Jean-Paul, F-26300 Alixan (FR); GAUTHIER, Alain, F-07300 Saint-Jean-de-Muzols (FR)
(74) Representative: Gevers & Orès
(86) International application number: PCT/IB2012/050091
(87) International publication number: WO 2012/093378

(56) References cited:
- EP-A2- 0 915 261
- FR-A1- 2 704 608

## Description

The present application relates to a dowel for a crumbly supporting material comprising, being made from a wound metal sheet blank, an abutment collar on the material, an end and, between the collar and the end, an expandable tubular body, with expanding means arranged for receiving a element i) for fastening a part to the supporting material and ii) for expanding the body and anchoring the dowel in the supporting material, (FR 2 704 608 171).

The part adjacent to the end, as a result of an appropriate stamping of the original metal sheet blank and after rolling, comprises helical threading portions ensuring a tapping function for receiving the thread of a fastening and anchoring screw. Thus, after the dowel has been applied in a supporting material, the part to be fastened on the supporting material is applied on the material, while covering the collar, then, through the part, a screw is introduced in the dowel and is screwed into the tapping portions of the dowel body, until the head of the screw comes in abutment against the part to be fastened or an intercalated washer. Upon strongly screwing the screw into the part adjacent to the end, the screw drives such a part towards the collar 1, thereby opening the intermediary part of the dowel body for anchoring the dowel behind the supporting material.

Such a dowel is more particularly described in document FR 2,927,382. Incidentally, this is a self-drilling dowel, but the Applicant does not contemplate being limited to such a dowel.

The tapping portions of the dowel body of such a prior art are similar to lamellas likely not to be robust enough. In the case where a wood screw would be used as a fastening and expanding element, it could even be feared that lamellas be pulled out.

In document DE 3528289, a dowel of the above defined type has already been proposed, wherein the expanding means comprise a portion of the tubular body being die cut so as to provide a tapping function.

While, thereby, the tubular body of the dowel does not become too weak as a result of being cut, the latter prior art dowel however has still some drawbacks.

The die cutting occurring on the metal sheet blank, before being wound, and extending on the whole width of the blank, so as to ensure the blank to be wound without too many difficulties, it has been suggested to preliminarily drill holes in the die cut blank portion so as to disrupt the die cutting. But this could result in taking the risk that, after the blank has been wound, some offset is generated between the die cut parts and thus breaks in the tapping that would thus no longer be continuous.

The invention of the present application aims at overcoming such a risk.

To this end, this invention relates to a dowel according to claim 1.

By means of the last two characteristics of the dowel of this invention, on the one hand, it is easy to roll the metal sheet blank and, on the other hand, the tapping parts are again matched the ones facing the others, while indexing them.

It should be noticed that the dowel in document EP 0518 010 teaches a dowel having, indeed, the expanding means thereof comprising a partially die cut portion of the tubular body, but which is not partially die cut, as this comprise distinct tabs already separated in the metal sheet blank and which, in turn, are completely die cut, on the one hand, and which, after the blank has been wound, are not indexed, on the other part, the risk of a tapping discontinuity remaining. As far as the assembly studs of the dowel of document EP 0518 010 are concerned, they are not provided in the portion of the tubular body comprising the tapping tabs that could thus not be indexed.

In the preferred embodiment of the dowel of this invention, the expanding means comprise two die cut globally diametrically opposed tapping parts.

Advantageously, the metal sheet blank is held wound by means of a mortise and tenon joint, the relative positioning of which, in the die cut portion of the tubular body, ensures the tapping continuity, the assembly being preferably of the dovetail type.

The end of the dowel could be a drilling end, the dowel becoming self-drilling.

The die cut portion of the dowel body could have a folding and/or a helical threading shape.

This invention will be better understood reading the following description of the preferred embodiment of the dowel of this invention with reference to the appended drawing, in which:
- Fig. 1 is a side view of a starting metal sheet blank of a first embodiment;
- Fig. 2 is a view illustrating the other side of the metal sheet blank of Fig. 1;
- Fig. 3 is a perspective view of the dowel obtained with the metal sheet blank of Figs. 1 and 2;
- Fig. 4 is a perspective view of a second embodiment of the dowel of this invention;
- Fig. 5 is axial sectional view of the dowel of Fig. 4;
- Fig. 6 is a cross-sectional view of the tubular body of the dowel of Fig. 4, along the line VI-VI of Fig. 5; and
- Fig. 7 is an axial sectional view of the dowel of Fig. 4 with a fastening and expanding screw partially introduced into the die cut portion of the body of the dowel.

The dowel that will be now described, in its two embodiments, has been achieved from a cut metal sheet blank, being subsequently folded and wound.

Achieving the dowel is not essential for understanding this invention. The only point that matters is that it has been achieved from a metal sheet blank. This is why the method itself for manufacturing the dowel will be practically not described, to the benefit of the description of the dowel. In any event, the man skilled in the art knows quite well the folded and wound metal sheet dowels.

The two embodiments of the dowel of the invention that will be now described are very similar and share a lot of identical elements. This is why such similar elements are referred to the same numerals, the numerals of different elements being merely added with a prime for one of the two embodiments.

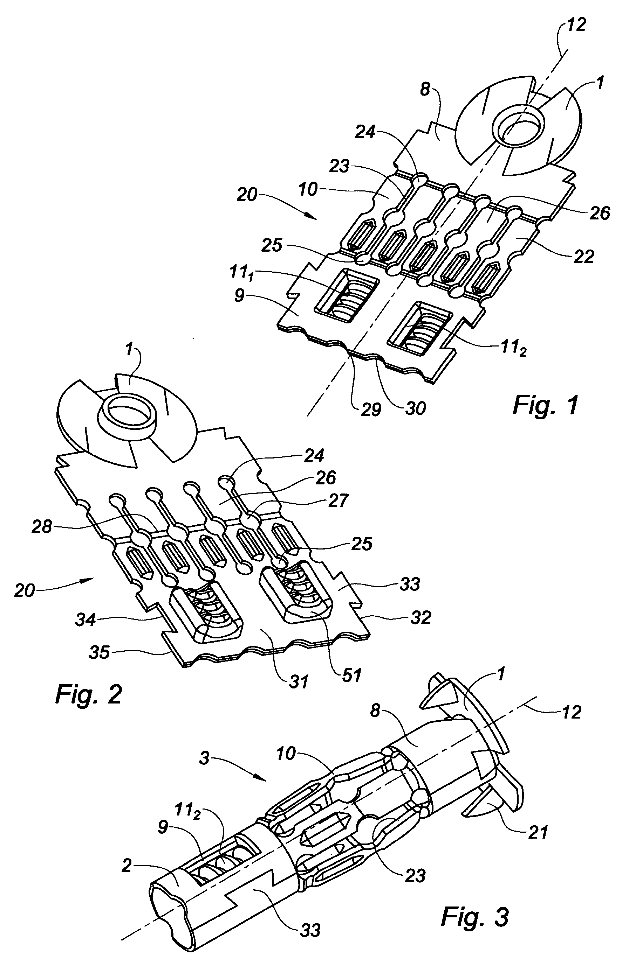

Referring to Figs. 1-3, the dowel is manufactured from a first cut, subsequently folded and then wound metal sheet blank 20.

Thus, the dowel of Figs 1-3 with an axis 12 comprises an abutment collar 1, an end 2 and, between the collar and the end, a expandable tubular body 3.

In the periphery to the abutment collar, having a ring general shape, and being illustrated folded down on the metal sheet blank on Figs. 1, 2, anti-rotation studs 21, with a substantially triangular general shape, are folded down, after being cut up.

The tubular body 3 comprises three parts, a part 8 adjacent to the collar 1, a part 9 adjacent to the end 2 and an intermediary part 10.

The intermediary part 10, originating from the substantially rectangular part 22 of the blank 20, comprises slots 23 extending parallel to the axis 12 between two eyelets 24; 25 drilled in the two transversal areas being common to parts 8, 10 and 9, 10 of the tubular body 3. The slots 23 disengage therebetween small strips 26 that, when being expanded, become folded down on themselves for ensuring the opening or the expansion of the part of the intermediary body 10. For further facilitating this opening, in the blank part 22, other intermediary eyelets 27 are drilled for shrinking the small strips 26 along a folding line 28 for the small strips.

The end 2 comprises a free edge 29 that has been notched through drilling eyelet portions 30, so that the end 2 is here a drilling end.

The part 9 adjacent to the end 2 comprises two die cut parts 11₁ and 11₂ formed in the metal sheet blank so that, after it has been wound, those two die cut parts, here angularly limited by a similar angle, are globally diametrically opposed. This is actually a double die cutting. In a first step, two bosses 50, 51 of a side 31 of the metal sheet blank (Fig. 2) have been formed, so as to reduce the opening section after the blank has been wound. In a second step, a second die cutting has been implemented on the bosses so as to form two helical threading parts 11₁ and 11₂. Such threading parts fill a tapping function adapted for receiving the thread of a fastening and anchoring screw. By means of the first bosses 50, 51, the tapping diameter has therefore been reduced, allowing a smaller screw to be used.

After the metal sheet blank 20 has been wound, it is maintained in such a condition by a dovetail joint in the portion of the tubular body 9. Thus, one 32 of the edges of such a portion parallel to the axis 12 comprises a projecting tenon 33 intended to cooperate with a mortise 34 drilled from the other edge 35 parallel to the axis 12 of such a portion of the body 9.

By means of such a mortise and tenon joint and here, in a dovetail joint shape, in the die cut part of the body 9, the two parts 11₁ and 11₂ can be matched and the continuity of the tappings thereof can thereby be maintained.

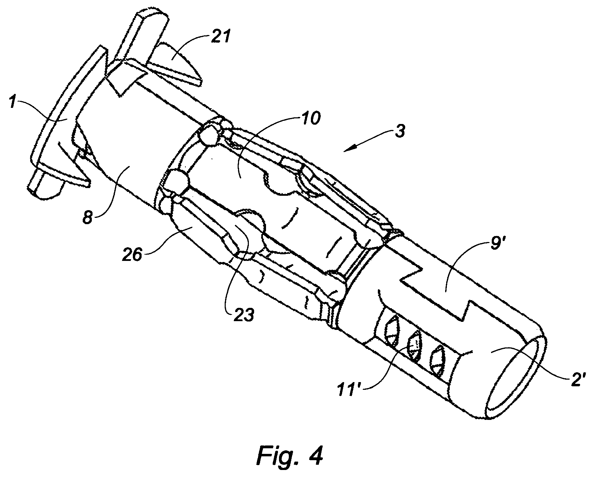

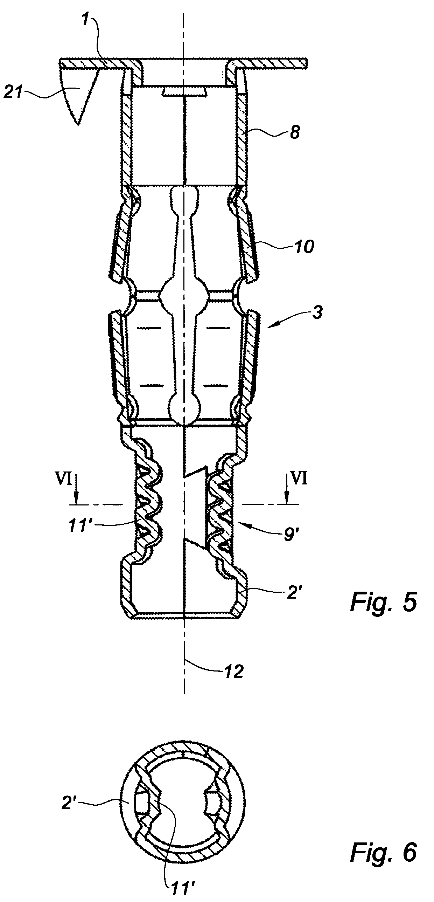

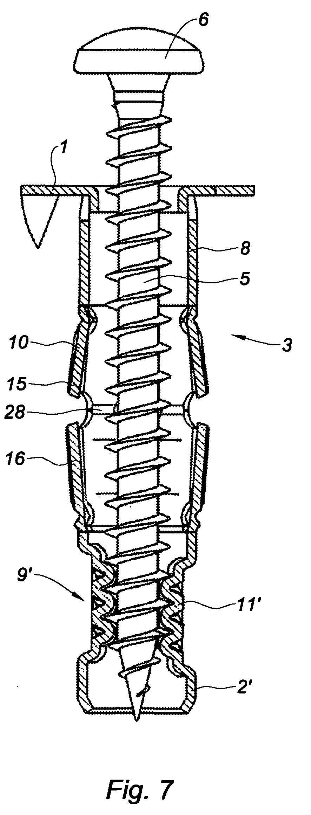

The embodiment of Figs. 4-7 of the dowel of this invention is nearly identical to the above described one. The free edge 29' of the end 2' is continuous, without any notch. As far as the portion of the body 9' adjacent to the end 2' is concerned, it also comprises two diametrically opposed die cut portions 11', forming two threading portions shrinking the inner section of the body 9 (Fig. 6) and still filling the tapping function necessary for the expansion and the anchoring of the dowel and for fastening the part to be fastened to the supporting material.

Thus after the dowel has been driven into a supporting material, and here, after a receiving hole has been drilled, the part to be fastened to the supporting material is applied on the material, while covering the collar 1, then through the part, the screw 5 is introduced in the dowel and is screwed in the threading portions 11' of the body of the dowel, until the head of the screws 6 comes in abutment against the part to be fastened or an intercalary washer. Strongly screwing the screw into the part 9' of the body of the dowel 3, the screws drives such a part 9' towards the collar 1, thereby opening the intermediary part 10 of the body of the dowel 3 for anchoring the dowel behind the supporting material.

The opening to be considered is mainly that of the slots 23 and the folding down of the small strips 24 of the body of the dowel coming in between the slots 23, said folding down being made easier through the structure of the intermediary part 10 in two frustoconical portions 15, 16 with a higher section in the junction plane thereof 28.

## Claims

1. A dowel for a crumbly supporting material comprising, being made from a metal sheet blank (20), an abutment collar (1) on the material, an end (2) and, between the collar (1) and the end (2), an expandable tubular body (3), with expanding means (9, 10) arranged for receiving an element (5) i) for fastening a part to the supporting material and ii) for expanding the body (3) and anchoring the dowel in the supporting material, **characterized in that** the expanding means comprise a portion (9) of the tubular body (3) being partially die cut for, after the helical winding of the blank (20), forming a tapping (11) and means (33, 34), in the partially die cut portion of the tubular body, ensuring the tapping continuity (11), wherein the tapping (11) is die cut on bosses (50, 51).

2. A dowel according to claim 1, wherein the expanding means comprise two globally diametrically opposed die cut tapping parts (11₁, 11₂).

3. A dowel according to one of claims 1 and 2, wherein the metal sheet blank (20) is maintained wound by a tenon (33) and mortise (34) joint, the relative positioning of which ensures, in the die cut portion of the tubular body (9), the tapping continuity.

4. A dowel according to claim 3, wherein the joint (33, 34) is of the dovetail joint type.

5. A dowel according to claim 1, wherein the die cut portion (9) has a folding shape.

6. A dowel according to any one of claims 1 to 5, wherein the die cut portion (9) has a helical threading shape.

## Patentansprüche

1. Dübel für ein bröckeliges Stützmaterial, umfassend einen Bund (1) zum Anschlagen an das Material, ein Ende (2) und zwischen dem Bund (1) und dem Ende (2) einen expandierbaren röhrenförmigen Körper (3), die aus einem Blechzuschnitt (20) hergestellt sind, mit Expandiermitteln (9, 10), die zur Aufnahme eines Elements (5) i) zum Befestigen eines Teils am Stützmaterial und ii) zum Expandieren des Körpers (3) und Verankern des Dübels im Stützmaterial angeordnet sind, **dadurch gekennzeichnet, dass** die Expandiermittel einen Abschnitt (9) des röhrenförmigen Körpers (3), der teilweise gestanzt ist, um nach dem spiralförmigen Wickeln des Zuschnitts (20) ein Innengewinde (11) zu bilden, und Mittel (33, 34) in dem teilweise gestanzten Abschnitt des röhrenförmigen Körpers umfassen, die die Kontinuität des Innengewindes (11) gewährleisten, wobei das Innengewinde (11) an Buckeln (50, 51) gestanzt ist.

2. Dübel nach Anspruch 1, wobei die Expandiermittel zwei global diametral gegenüberliegende gestanzte Innengewindeteile (11₁, 11₂) umfassen.

3. Dübel nach einem der Ansprüche 1 und 2, wobei der Blechzuschnitt (20) durch eine Zapfen- (33) und Schlitzverbindung (34) gewickelt gehalten wird, deren relative Positionierung im gestanzten Abschnitt des röhrenförmigen Körpers (9) die Kontinuität des Innengewindes gewährleistet.

4. Dübel nach Anspruch 3, wobei die Verbindung (33, 34) nach der Art einer Schwalbenschwanzverbindung ist.

5. Dübel nach Anspruch 1, wobei der gestanzte Abschnitt (9) die Form einer Faltung hat.

6. Dübel nach einem der Ansprüche 1 bis 5, wobei der gestanzte Abschnitt (9) die Form eines Spiralgewindes hat.

## Revendications

1. Cheville pour un matériau de support friable comprenant, fabriqués à partir d'une ébauche en tôle métallique (20), un col de butée (1) sur le matériau, une extrémité (2) et, entre le col (1) et l'extrémité (2), un corps tubulaire expansible (3) avec des moyens d'expansion (9, 10) prévus pour recevoir un élément (5) i) pour fixer une pièce au matériau de support et ii) pour dilater le corps (3) et ancrer la cheville dans le matériau de support, **caractérisée en ce que** les moyens d'expansion comprennent une portion (9) du corps tubulaire (3) en partie découpée par matriçage pour, après l'enroulement en hélice de l'ébauche (20), former un taraudage (11) et des moyens (33, 34), dans la portion en partie découpée par matriçage du corps tubulaire, pour assurer la continuité du taraudage (11), le taraudage (11) étant découpé par matriçage sur des bossages (50, 51).

2. Cheville selon la revendication 1, dans laquelle les moyens d'expansion comprennent deux parties de taraudage (11₁, 11₂) découpées par matriçage et globalement diamétralement opposées.

3. Cheville selon l'une quelconque des revendications 1 et 2, dans laquelle l'ébauche en tôle métallique (20) est maintenue enroulée par un joint à tenon (33) et mortaise (34), dont le positionnement relatif garantit, dans la portion découpée par matriçage du corps tubulaire (9), la continuité du taraudage.

4. Cheville selon la revendication 3, dans laquelle le joint (33, 34) est du type joint à queue d'aronde.

5. Cheville selon la revendication 1, dans laquelle la portion découpée par matriçage (9) présente une forme repliée.

6. Cheville selon l'une quelconque des revendications 1 à 5, dans laquelle la portion découpée par matriçage (9) présente une forme de filetage hélicoïdal.
